# EUROPEAN PATENT SPECIFICATION

(11) **EP 3 355 490 B1**
(45) Date of publication and mention of the grant of the patent: **06.05.2020**
(21) Application number: 17305108.7
(22) Date of filing: 31.01.2017
(51) Int. Cl.: H04B 10/25, H04B 10/291, H04B 10/297

(54) **OPTICAL SIGNAL TRANSMISSION THROUGH OPTICAL FIBRES USING BOTH CO AND COUNTER PROPAGATING MODES**
OPTISCHE SIGNALÜBERTRAGUNG ÜBER GLASFASERN UNTER VERWENDUNG VON SOWOHL CO- ALS AUCH GEGENVERBREITUNGSMODI
TRANSMISSION DE SIGNAL OPTIQUE À TRAVERS DES FIBRES OPTIQUES UTILISANT À LA FOIS LES MODES DE CO-PROPAGATION ET DE CONTRE-PROPAGATION

(43) Date of publication of application: 01.08.2018
(73) Proprietor: Nokia Solutions and Networks Oy, 02610 Espoo (FI)
(72) Inventor: ZAMI, Thierry, 91620 Nozay (FR); FELDMAN, Robert D, New Jersey, 07974-0636 (US)
(74) Representative: Mills, Julia

(56) References cited:
- WO-A2-02/03579
- US-A- 6 101 016
- US-A1- 2013 259 055

## Description

### FIELD OF THE INVENTION

The field of the invention relates to the technical field of optical communication systems, in particular to transmitting multiple bands of optical signals in a waveguide using both co and counter propagating modes.

### BACKGROUND

There is an increasing demand for telecommunication services fuelled by new applications such as 5G wireless, cloud services, HD video on demand. This impacts all the layers of the telecommunication infrastructures including the WDM (wavelength division multiplexing) networks.

It would be desirable to increase the capacity of optical fibre networks while using already deployed fibres. Conventionally signals have been transmitted through optical fibres in the C-band, this band covers 1530 to 1565 nm and can contain up to 96 channels. This band has been used as it is particularly suited to Erbium doped fibres and amplifiers based on these fibres. One way of increasing the capacity of the optical signals that can be transmitted that has been discussed is to send signals using both the C band and a further band. The further band that has been considered is the L-band. The L-band covers the wavelengths 1570 to 1610 nm and as this is close to the C-band signals can be sent along the same fibres albeit the amplifiers, transponders and wavelength grating cross connects will need to be modified.

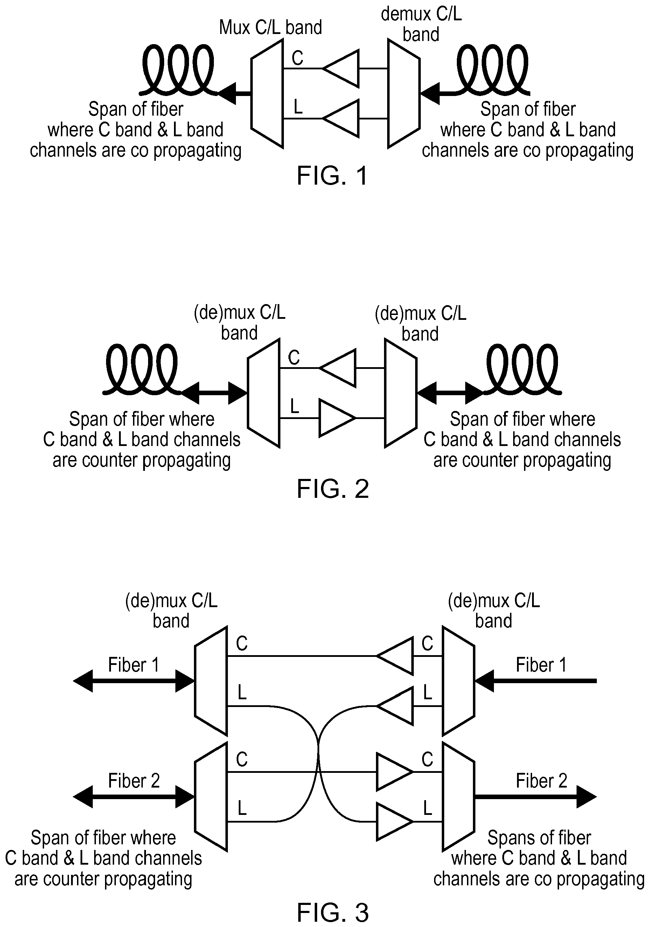

However, one problem with a C + L band implementation is that such dual band transmission suffers from higher non-linear impairments when compared with simply deploying 2 conventional C band WDM transmission lines in parallel. This is due to non-linear effects between the C and L bands, such as the Raman tilt. This reduces the transmission reach of the channels on the C band. One way of addressing this that has been proposed is to counter propagate C band signals and L band signals such that they are sent in different directions along the same fibre. This can reduce the inter band non- linear effects and requires very little modification from the initial co-propagating setup. Where optical fibre amplifiers are used then these need to be reversed. Figure 1 shows a system where the C and L band signals co-propagate and Figure 2 shows a system where the C and L band signals counter propagate.

A problem with this counter-propagating arrangement occurs when contra Raman amplifiers are used to amplify the signal. Contra Raman amplification involves sending a signal in the opposite direction to the signal to be amplified and uses the Raman tilt effect to provide amplification to this signal. Raman pumps are set to be about 110 nm away from the spectral band they amplify. This means that the pumps amplifying the L band range from 1420 to 1500 nm. This latter upper limit is close to the lowest wavelengths of the C band. The pumps of a contra Raman amplifying system propagate in the reverse direction compared to the channels they amplify. So in a counter propagating C+L system with contra Raman amplification, the Raman pumps amplifying the L band would co-propagate with the C band signals. As these pumps would be much more powerful than the C band signals, such architecture would lead to dramatic non-linear degradation from these pumps on the lowest wavelengths transmitted on the C band.

WO02/03579 discloses a method of increasing usable bandwidth on a long-haul cable system having at least one optical fibre by employing counter propagating band signals, preferably, counter-propagating C-band and L-band signals, thereby significantly reducing the Raman effects associated with co-propagating bands.

US6101016 discloses a method and system for transmitting very high bit rates over an optical link, using unidirectional and bidirectional WDM technology, The 1550 nm window for optical transmission is spatially separated into two bands, "Red" and "Blue", and the channels in each band are selected so that respective wavelengths present a substantially equal gain tilt. A fiber amplifier designed according to spatial separation and wavelength selection of the invention is disclosed, along with multiple span WDM network topologies.

US 2013/259055 discloses Methods and systems for optical communication in a submarine network. An input signal is received from a terminal at a reconfigurable branching unit (BU), wherein the BU enables bidirectional transmission between any two terminals, and the input signal is demultiplexed into at least one individual waveband or wavelength using at least one demultiplexer. Each demultiplexed waveband is passed through optical switches, with corresponding optical switches for the same demultiplexed waveband provided for transmission in the reverse direction. Independent per-waveband switching is performed using a demultiplexer-switch-multiplexer (DSM) architecture e. Each demultiplexed waveband is multiplexed at each output port using at least one multiplexer to combine signals from different sources, and combined signals are transmitted to a destination terminal.

It would be desirable to be able to provide a system that addresses at least some of the above issues.

### SUMMARY

A first aspect of the present invention provides an optical signal amplification device according to claim 1.

The inventors of the present invention recognised that although counter propagation had many advantages in a system using dual bands such as L - and C-bands as transmission windows, it precludes the use of contra Raman amplification which amplification method is extremely useful where long optical fibre spans are required. In this regard, there are certain circumstances where long spans are extremely desirable and others where shorter spans are acceptable. Thus, being able to select a particular propagation mode for a particular span would be advantageous.

For historical reasons optical fibres are generally deployed as pairs of fibre, with signals travelling in one direction in one fibre and the opposite direction in the other. When amplifying signals using erbium doped fibre amplifiers the two bands of signals, the C- and L-bands in some embodiments, are separated such that a different configuration of amplifier can be used for the different band signals. The inventors recognised that the presence of the fibre pairs and the separation of the different signal bands during amplification between the fibre spans provide an opportunity to direct each band to a selected one of the fibre pair. By controlling the directing of the signals, the propagation mode can be changed between spans as required simply by providing optical paths between the multiplexers attached to the different fibres. This allows fibres of one span to transport signals in a counter propagation mode and where for example, a Raman amplifier is to be used in a subsequent span the mode can be changed to provide co propagation of the signals in this span.

The multiplexing devices are operable to transform between one wider band signal and two narrower band signals.

In this regard, one way of increasing the capacity of optical fibres, is to use multiple bands. One way that has been considered is to use 2 bands, the C band and L band, these being suitable for transmission along conventional optical fibres. Where there are two bands used, then in embodiments the multiplexing devices are operable to transform between one wider band and two narrower bands.

In some embodiments, each of said multiplexing devices is connected via two optical paths to at least one other multiplexing device.

In some embodiments, said wider band signal comprises a signal comprising signals in both a C-band and an L-band and each of said narrower band signals comprise signals in one of said C- or said L-band.

As noted previously, one way of increasing capacity within optical fibres is to use both the C and the L band for signal transmission. Having two bands significantly increases the capacity of the fibre and also allows counter propagation of the two bands of signals, allowing for a bidirectional optical fibre. During amplification the bands may be separated by the multiplexing devices such that they can be fed to appropriate amplifiers. The separation of the signals in this way also allows them to be directed via optical paths to different optical fibres where it is deemed appropriate.

In some embodiments, at least some of said plurality of multiplexing devices comprise wavelength selective switches operable to select a subset of said wider band signal as one of said narrower band signals and a disjoint subset of said wider band signal as a further one of said narrower band signals.

Although the multiplexing devices may be formed in a number of ways, in some embodiments they comprise wavelength selective switches WSS. Wavelength selective switches are programmable, that is software controlled and can be configured to select particular wavebands from a wider waveband. In this way, the wider waveband can be split into two or more narrower wavebands and these may have different widths allowing more channels in one direction than another. The disjoint subsets are different subsets where the two subsets have no elements in common, that is no overlapping wavelengths.

In some embodiments, said optical paths connecting to said multiplexing device associated with one port of said first pair of ports comprise amplifiers amplifying signals in said first direction; and said optical paths connected to said multiplexing device associated with the other port of said first pair of ports comprise amplifiers amplifying signals in said reverse direction.

Where amplifiers for amplifying the signal are direction dependent, then where there are two optical paths connected to one multiplexer associated with one port of a pair of ports and two optical paths connected to another multiplexer associated with the other port of the pair, two of the optical paths may comprise amplifiers amplifying in one direction and the other two comprise amplifiers amplifying in the other direction. In other embodiments, the two optical paths connected to each multiplexer may comprise an amplifier amplifying in one direction and an amplifier amplifying in the other direction. It should be noted that the multiplexers may have be connected to more than two optical paths and these paths may also have amplifiers.

In some embodiments, the optical signal amplification device further comprises a single Raman pump arranged to pump one of said first pair of optical fibres, said multiplexers associated with said first pair of ports each being connected to two of said multiplexers associated with said further pair of ports.

One way of amplifying signals comprises using a Raman pump that transmits a signal along the optical fibre in the opposite direction to the signal that it is amplifying. This amplifying method is used to amplify the signal within the optical fibre in a span and as such, operates on the wider band signals. As noted previously, problems occur where there is a counter propagating signals as the Raman pump signal will be in the same direction as one of the signals. For this reason, where there is a Raman pump on one side of the amplification device then the signals along that optical fibre span will be co-propagating optical signals. Where there is no Raman pump associated with the ports of the other side of the amplification device then the optical fibre span of the other pair of ports will not be using Raman amplification and it is therefore advantageous if the signals they transmit are counter-propagating. Thus, in the case where there is a single Raman pump associated with the amplification device it is advantageous if the amplification device comprises multiplexers associated with one pair of ports connected to two multiplexers connected to the other pair of ports to provide the switching of a subset of the signals between fibres required to switch from co to counter propagation. Where there is Raman amplification on both spans of the optical fibres connected by the amplification device, then no switching of signals between fibres is required.

Thus for an optical signal amplification device that is manufactured with a Raman pump associated with one of the ports, the device can be permanently configured to change the propagation mode of the signal sent by the optical fibre through the device such that on the Raman pump side the signals are co-propagating and on the other side, the signals have switched to counter-propagating signals. Where an amplification device has a Raman pump associated with a port on one side of the device, during installation then the amplification device may be a configurable device which is configured in the path converting configuration on installation.

In some embodiments, the optical signal amplification device further comprises at least one switching means operable to selectively connect together optical sub-paths connecting to each of said multiplexing devices associated with said first pair of ports with optical sub-paths connecting to each of said multiplexing devices associated with said further pair of ports to form optical paths between said devices; wherein in said path converting configuration said at least one switching means is operable to connect said optical sub-paths such that optical paths are provided between each of said multiplexing devices associated with one pair of ports and both multiplexing devices associated with the other pair of ports, such that co-propagating signals transported by one pair of optical fibres, are converted to counter propagating signals for transport by the other pair of optical fibres; and in a non-path converting configuration said switching means is operable to connect said optical sub paths such that multiple optical paths are provided between each of said multiplexing devices associated with one pair of ports and a corresponding one of said multiplexers associated with the other pair of ports.

In some embodiments, it may be advantageous to manufacture an optical signal amplification device that can be used in a plurality of different situations and thus can be configured in different ways. In this regard, changing the propagation mode between either side of the optical signal amplification device is done using optical paths which connect one multiplexer to multiple multiplexers at the other side. Having a switching device which allows this cross path configuration or allows a straight path configuration where one multiplexer is connected via two optical paths to one other multiplexer, allows a device which can either be configured to change the propagation mode of the signals in the optical spans on either side of the device or can be configured such that the propagating mode does not change and stays either as counter propagating or as co-propagating in both spans of the optical fibre. Providing a switch within the optical signal amplification device has some losses associated with it but has the advantage that only one device needs to be manufactured for multiple applications. The device can be configured on installation when it is determined which propagation mode is required for the span of optical fibres to which it is connected. In this regard, in many cases, the presence of a Raman pump connected to one optical fibre on one side will indicate that that optical fibre should operate in a co-propagating mode. The Raman pump may be added separately to the optical signal amplification device and not manufactured as part of it such that when installing the device, the propagation modes can be determined and the switch set appropriately. In other embodiments, the Raman pump may be part of the optical signal amplification device and in such a case the propagation modes of the optical fibres to which the optical signal amplification device is to be connected is determined by the presence of the Raman pump at manufacture and thus, such optical signal amplification devices would preferentially be manufactured without switches as they can be configured at manufacture to either change the propagation mode where there is only one Raman pump associated with them or to maintain the propagation mode where there is a Raman pump on one port on either side of the device.

In some embodiments the amplification device further comprises two switching means, one of said switching means operable to selectively connect two optical sub paths connected to each of two multiplexing devices associated with said first pair of ports to two optical sub paths connected to two of said amplifiers, each of said two amplifiers amplifying signals in different directions; and said further of said switching means operable to selectively connect two optical sub paths connected to each of two multiplexing devices associated with said further pair of ports to two optical sub paths connected to said two of said amplifiers.

A pair of switches on either side of two amplifiers amplifying signals in different directions provides a system that is flexible enough to handle all possible cases of co and counter propagation on each side of the amplification device.

In some embodiments, said switching means is operable to connect optical sub paths connecting to a portion of said multiplexing device configured for a same narrower band.

The optical sub-paths that are connected via the switch should be those for transporting signals of the same narrower band. In this regard, a portion of the sub-path will have an amplifier which will be band specific and both optical sub-paths will connect with the multiplexing device and the connection should be made such that the signal arrives at the portion of the multiplexer configured for that narrower band.

In some embodiments, said switching means comprises an optical spatial cross-bar switch.

Although the switching means can be manufactured in a number of different ways provided that it is able to transfer the optical signals between the optical paths, in some embodiments, it is an optical spatial cross-bar switch which allows two optical sub-paths to be connected to two other optical sub-paths in two different configurations.

The optical signal amplification device it comprises four multiplexing devices. As noted previously, many optical fibre communication systems comprise pairs of optical fibres which were conventionally used for the go and return signals. Although with the use of multiple bands the optical fibres can now transport signals bi-directionally, the systems generally still have optical fibres arranged in pairs. Thus, where the amplification device is manufactured for such an optical communication system, it will have two pairs of ports with a multiplexing device associated with each port. Thus, there will be four multiplexing devices.

Although the amplifiers on the optical paths may have a number of forms depending on the waveband that they are amplifying, in some embodiments they comprise erbium doped fibre amplifiers. These are particularly appropriate for C band and L band signals which can be transported along conventional erbium doped optical fibres.

In some embodiments, said amplifiers on said optical paths are configured to amplify a selected one of said narrower bands, said multiplexing devices being configured to route signals of a band appropriate to said amplifier to said corresponding optical path.

Although the different band signals may both be amplified by the same type of amplifier, for example, an erbium doped fibre amplifier, these amplifiers will still be differently configured for the different waveband signals and thus, the multiplexer will route the narrower band signals to the optical path with the appropriate amplifier on it.

A second aspect of the present invention provides a method according to claim 13.

As discussed previously, optical signal amplification devices that can change between co-propagating and counter-propagating modes of optical signal transport are useful where the type of amplification changes between optical spans. However, in many cases there may be no need to change the mode of propagation as for several spans in a row the amplification method may stay the same and thus, either co- or counter-propagating mode may be the preferred mode. It may therefore be advantageous if the optical signal amplification device can be configured on installation to either convert the propagation mode or to transport the signals such that the propagation mode stays the same. This way of modifying the optical signal amplification device is done at installation once the propagation modes are known. It may be done by simply manually fitting the optical fibre paths to the appropriate ports of the multiplexing devices or it may be done using a switching means within the optical paths which allows the configuration to change, such that the propagation modes are either converted or remain the same. A switching device is simpler to operate but has losses associated with it.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates uni-directional C and L band optical amplifiers where the C and L band signals are co propagating in the optical fibres according to the prior art;
Figure 2 illustrates bidirectional C and L band optical amplifiers where the C and L band signals are in counter propagating in the optical fibres according to the prior art;
Figure 3 illustrates a double optical amplifier that provides switching between the co-propagating mode and the counter propagating mode according to an embodiment;
Figure 4 illustrates a flexible double optical amplifier configurable to provide switching between modes, or to provide no switching according to an embodiment;
Figure 5 illustrates two operating modes of the double optical amplifier of Figure 4;
Figure 6 illustrates a flexible double optical amplifier configured to provide switching between multiple modes; and
Figure 7 illustrates a network where C and L band transponders are connected to optical fibres configured to transmit both bands as counter propagating signals.

### DESCRIPTION OF THE EMBODIMENTS

Before discussing the embodiments in any more detail, first an overview will be provided.

An amplification system that offers a flexible layout that can benefit both from a counter propagating and a co-propagating setup is provided. For the part of a network where co-propagating is appropriate, such as where contra Raman amplification is used (for instance along the very long spans) then this can be provided, however, the system can change to a counter-propagation set up where counter-propagation of the signals is preferable.

The ability to swap from a co-propagating mode to a counter-propagating mode from span to span along a given WDM link (Optical Multiplexing Section) allows the system to provide the preferred mode for each span as appropriate.

The amplification system allows the switching to occur by transforming between a wider band signal transmitted along one optical fibre of a pair of optical fibres in a span, and multiple narrower band signals using a multiplexing device. Paths are provided to transport the narrower band signals between two spans, such that at least one of the narrower band signals is directed to one optical fibre in the adjacent span and at least one of the narrower band signals to the other optical fibre in the adjacent span. The provision of multiplexing devices to split the signals into multiple narrower bands and of optical paths to transmit the narrower signals between the different optical fibres of the pairs, allows the propagation mode in the different spans to be changed between co and counter propagation.

Figures 1 and 2 show optical amplifiers used on single optical fibres carrying both C and L band signals according to the prior art. Figure 1 shows the set up where co-propagation is used, that is where both signals are transmitted in the same direction.

Figure 2 shows the set up where counter propagation is used, that is the C-band signals are transmitted in one direction and the L-band signals in the other. As can be seen multiplexers and demultiplexers are used to separate the two bands prior to amplification. This allows different amplifiers to be used with properties suited to the particular band. It also allows the signals being transmitted in different directions.

As can be seen, although Figures 1 and 2 show amplification devices that can amplify signals transmitted using either co or counter propagation, the propagation mode remains constant across each amplification device. Embodiments seek to change this and make use of the fact that WDM links deployed in the field exhibit at least 2 fibres with counter propagating WDM combs. So by making use of the 2 fibres laid in parallel along the same cable, it is possible to swap from "co" to "counter" (or vice versa) as the propagating mode of C and L bands from span to span as is shown in Figure 3.

From Figure 3 one can see that a C-band signal is sent from left to right, the go path in fibre 2 and from right to left, the return path, in fibre 1. The L-band signal is sent in the go direction in the span of fibre 1a and is therefore counter propagating with the C-band signal in this span of the fibre. It is then switched to fibre 2b by the optical paths within the amplification device and as it is still travelling in the go direction it is now co propagating with the C band signal in this span. This switch may be desired owing perhaps to Raman amplification in this span. In this case, simply swapping the two L band signals between the fibres allows the L-band signals to co-propagate with the C-band signals in the right hand span, fibres 1b 1nd 2b and to counter propagate in the left hand span fibres 1a and 2a.

As explained earlier the counter propagating C+L setup is generally preferred as compared to the co propagating one because it can mitigate interband non-linear interaction without extra implementation complexity. However, for the specific case of spans with contra Raman amplification, the co-propagating C+L band setup is more appropriate. The embodiment of Figure 3 can allow the preferred mode to be selected for a particular span. Currently spans without Raman amplification are the most widespread. Hence the designer of a WDM network based on C+L technology can plan the network with counter propagating bands and the related amplifiers depicted in Figure 2. However, if for some reason, the bands should be co-propagated in some of the spans of the designed network, the designer can use the C+L amplifiers as set out in Figure 3 to revert to the required propagation mode in these specific spans.

In Figure 3 the propagation directions of the L band signals are swapped while the ones of the C band signals remain unchanged. However, it should be clear to a skilled person that the reverse interconnection, where the L bands remain unchanged and the C bands are swapped is also possible.

Furthermore in Figure 3, the multiplexers are arranged with amplifiers as for Figure 1, such that amplifiers of a same direction are connected to one multiplexer. However, in alternative embodiments (not shown) multiplexers with amplifiers amplifying in different direction as for figure 2 may be used. In the latter case counter propagation would be maintained with straight optical paths between the multiplexers of different ports, and a switch between co and counter propagation would result from the paths crossing, such that one multiplexer is connected to two multiplexers.

One C+L amplification device according to the examples of Figures 1 to 3 can connect to four pairs of optical fibre spans in four different configurations:
1) co propagating C and L bands on the right-hand side with co propagating C and L bands on the left-hand side
2) counter propagating C and L bands on the right-hand side with counter propagating C and L bands on the left-hand side
3) co propagating C and L bands on the right-hand side with counter propagating C and L bands on the left-hand side
4) counter propagating C and L bands on the right-hand side with co propagating C and L bands on the left-hand side.

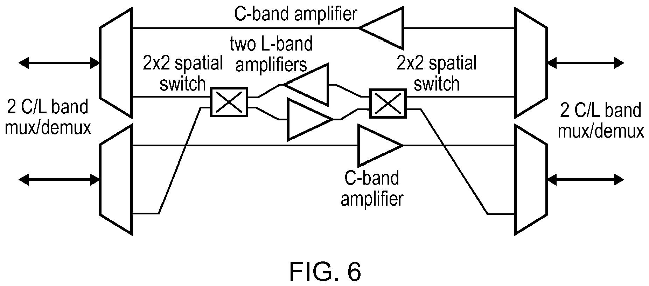

In case 1, the amplification device of Figure 1 could be used.
in case 2, the amplifier of Figure 2 is applicable.
In cases 3 and 4, the novel amplifier of Figure 3 is required because the amplification modes of Figures 1 and 2 are inappropriate.
In all of the cases the amplification device of Figure 6 (described later) could be used.

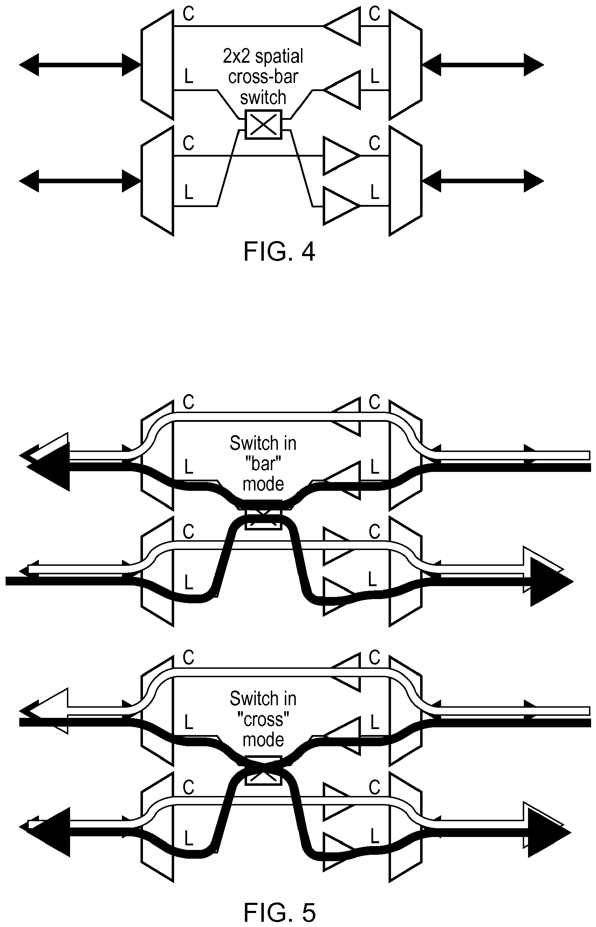

Addressing the issue with the embodiments of Figures 1 to 3 means that 3 types of amplification device need to be supported in the product line to cope with all the possible situations. An alternative solution is provided by the C+L band bidirectional amplifier illustrated in Figure 4 and in Figure 6.

The amplification device of Figure 4 is similar to that of Figure 3, but has a switching means, in this case an optical spatial cross/ bar switch in between the two L band paths. Switching of this switch allows the amplification device to be configured with the paths straight so that the 2 amplifiers are arranged in parallel and mimic the amplification device of Figure 1, where co-propagation continues. Alternatively, the switch can be set to cross paths and an amplification device like the double amplifiers of Figure 3 is provided where co to counter propagation is provided. In the drawing of Figure4 the switch has been placed in the L-band light path, but it could rather be placed on the C band path.

In the devices of Figures 3 and 4 the configuration is based on two optical amplifiers as illustrated in Figure 1 arranged in parallel with a crossing of one optical path from each multiplexer . An alternative embodiment would be one based on the two amplifiers arranged for counter propagation as shown in Figure 2. Again a crossing of the optical paths would lead to a change in propagation mode.

Figure 5 shows the double reconfigurable C+L amplifier of Figure 4 with the switch set to each of the two configurations. Thus, in the first Figure of Figure 5 the switch is in the bar mode and co-propagation is maintained, while in the second Figure of Figure 5 the switch is set to cross mode and the propagation mode switches between co and counter propagation. Were the dual amplifiers to be based on those of Figure 2 not Figure 1, then when the switch is in the bar mode counter propagation is maintained and when it is in the cross mode the propagation mode switches between counter and co propagation.
Figure 6 shows an alternative more flexible amplification device which has two switching devices in the optical paths connecting the L-band amplifiers to the multiplexing devices. These two switching devices allow the amplification device to be configured in co-propagating to co-propagating mode, counter propagating to counter propagating mode and co- to counter propagating mode. Thus a large degree of flexibility is provided with this amplification device and allows it to be used in all of the considered scenarios. However, two switching devices are required to provide this increased degree of flexibility.

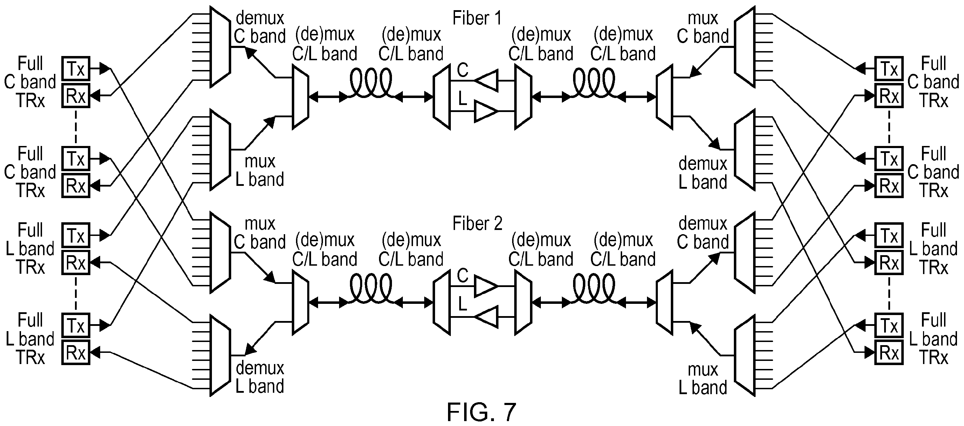

For the sake of clarity, it is important to point out that the counter propagating layout described above does not require hybrid transponders that are able to emit on C band and receive on L band (and vice versa). Pure C band and pure L band transponders can still be used in this context as exemplified by the schematic diagram of Figure 7, provided that the system is implemented with 2 optical fibers in parallel.

Counter propagation is where a portion of the signals transmitted by an optical fibre are transmitted in one direction and another portion in the other opposite direction. The portion of the signals may be all the signals within a specific band, alternatively they may be a subset of them. A fibre may transmit several bands some of which may be counter propagating with each other and some co propagating. Where any signals are counter propagating with any other signals then the mode of transmission of that optical fibre is deemed to be counter propagation.

Although the two bands described with respect to Figures 1 to 7 are C and L bands embodiments could be used for the transmission of other bands. In this regard the bands might be the C band and one other band, or they might be two other bands, or the system may be used where more than two bands are transmitted.

Although the examples given are for two bands of signals that are demultiplexed into individual bands, it should be clear to the skilled person that the multiplexers may not demultiplex across whole bands. Thus, the demultiplexers may in some embodiments be configured to split the wider band signals into unequal parts, such that the two narrower band signals have different bandwidths, the wider one being transmitted in one direction, perhaps the go direction and the narrower one in the reverse or return direction.

Furthermore, where appropriate the signals may be demultiplexed into more than two different sets of signals. This may be appropriate where more than two types of amplifiers are required. In such a case one of the sets of demultiplexed signals may be directed to one of the optical fibres and the other multiple sets to the other optical fibre.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. An optical signal amplification device comprising:
four ports comprising a first pair of ports for connecting to a first pair of optical fibres and a further pair of ports for connecting to a further pair of optical fibres;
four multiplexing devices, each multiplexing device being associated with a corresponding port, each of said multiplexing devices being operable to transform between a wider band signal and two narrower band signals;
optical paths for transporting said two narrower band signals between said four multiplexing devices, said optical paths being configured to provide paths between said multiplexing devices associated with said first pair of ports and said multiplexing devices associated with said further pair of ports;
two of said optical paths comprising amplifiers for amplifying signals travelling in a first direction from said first pair of ports to said further pair of ports and two of said optical paths comprising amplifiers for amplifying signals travelling in a reverse direction from said further pair of ports to said first pair of ports; wherein
said optical signal amplification device comprises a path converting configuration in which said optical paths are configured such that paths are provided between each of said two multiplexing devices associated with one pair of ports and each of said two multiplexing devices associated with the other pair of ports, such that co-propagating signals transported by one pair of optical fibres are directed along said paths between said multiplexing devices such that they are transported as counter propagating signals by the other pair of optical fibres.

2. An optical signal amplification device according to claim 1, wherein each of said multiplexing devices is connected via two optical paths to at least one other multiplexing device.

3. An optical signal amplification device according to any preceding claim, wherein said wider band signal comprises a signal comprising signals in both a C-band and an L-band and said narrower band signals comprise signals in one of said C-band or said L-band.

4. An optical signal amplification device according to any preceding claim, wherein at least some of said plurality of multiplexing devices comprise wavelength selective switches operable to select a subset of said wider band signal as one of said narrower band signals and a different subset of said wider band signal as a further one of said narrower band signals.

5. An optical signal amplification device according to any preceding claims, wherein said optical paths connecting to said multiplexing device associated with one port of said first pair of ports comprise amplifiers amplifying signals in said first direction; and
said optical paths connected to said multiplexing device associated with the other port of said first pair of ports comprise amplifiers amplifying signals in said reverse direction.

6. An optical signal amplification device according to any preceding claim, further comprising a single Raman pump arranged to pump one of said first pair of optical fibres, said multiplexers associated with said first pair of ports each being connected to two of said multiplexers associated with said further pair of ports.

7. An optical signal amplification device according to any one of claims 1 to 5, said device further comprising:
at least one switching means operable to selectively connect together optical sub-paths connecting to each of said multiplexing devices associated with said first pair of ports with optical sub-paths connecting to each of said multiplexing devices associated with said further pair of ports to form optical paths between said devices; wherein
in said path converting configuration said at least one switching means is operable to connect said optical sub-paths such that optical paths are provided between each of said multiplexing devices associated with one pair of ports and both multiplexing devices associated with the other pair of ports, such that co-propagating signals transported by one pair of optical fibres, are converted to counter propagating signals for transport by the other pair of optical fibres; and
in a non-path converting configuration said at least one switching means is operable to connect said optical sub paths such that multiple optical paths are provided between each of said multiplexing devices associated with one pair of ports and a corresponding one of said multiplexers associated with the other pair of ports.

8. An optical signal amplification device according to claim 7, wherein said at least one switching means is operable to connect optical sub paths connecting to a portion of said multiplexing device configured for a same narrower band.

9. An optical signal amplification device according to claim 7 or 8, wherein said at least one switching means comprises an optical spatial cross-bar switch.

10. An optical signal amplification device according to any one of claims 7 to 9, comprising two switching means, one of said switching means operable to selectively connect two optical sub paths connected to each of two multiplexing devices associated with said first pair of ports to two optical sub paths connected to two of said amplifiers, each of said two amplifiers amplifying signals in different directions; and
said further of said switching means operable to selectively connect two optical sub paths connected to each of two multiplexing devices associated with said further pair of ports to two optical sub paths connected to said two of said amplifiers.

11. An optical signal amplification device according to any preceding claim, wherein said amplifiers on said optical paths comprise erbium doped fibre amplifiers.

12. An optical signal amplification device according to any preceding claim, wherein said amplifiers on said optical paths are configured to amplify a selected one of said narrower bands, said multiplexing devices being configured to route signals of a band appropriate to said amplifier to said corresponding optical path.

13. A method of configuring an optical signal amplification device within an optical network, said optical signal amplification device comprising a first pair of ports for connecting to a pair of optical fibres of one span and a further pair of ports for connecting to a pair of optical fibres of a further span, four multiplexing devices, each multiplexing device being associated with a corresponding port, each of said multiplexing devices being operable to transform between a wider band signal and two narrower band signals; optical paths for transporting said narrower band signals between said four multiplexing devices, said optical paths being configured to provide paths between said multiplexing devices associated with said first pair of ports and said multiplexing devices associated with said further pair of ports; two of said optical paths comprising amplifiers for amplifying signals travelling in a first direction from said first pair of ports to said further pair of ports and two of said optical paths comprising amplifiers for amplifying signals travelling in a reverse direction from said further pair of ports to said first pair of ports; said method comprising:
determining whether said two spans of optical fibre pairs to be connected by said amplification device are to change between co and counter signal propagation and if so:
forming optical paths within said amplification device such that each of said multiplexing devices associated with said first pair of ports is connected by an optical path to each of said multiplexing devices associated with said further pair of ports, such that co-propagating signals transported by one pair of optical fibres, each fibre in said pair transporting signals in a different direction, are converted to counter propagating signals for transport by the other pair of optical fibres; and if not
forming optical paths within said amplification device such that each of said multiplexing devices associated with said first pair of ports is connected by multiple optical paths to a corresponding one of said multiplexers associated with said further pair of ports, such that there is no change in the propagation mode of said signals.

14. A method of configuring an optical signal amplification device according to claim 13, wherein forming said optical paths comprises switching a switch.

## Patentansprüche

1. Optiksignalverstärkungsvorrichtung, die Folgendes umfasst:
vier Ports, die ein erstes Paar von Ports zum Verbinden mit einem ersten Paar optischer Fasern und ein weiteres Paar von Ports zum Verbinden mit einem weiteren Paar optischer Fasern umfassen;
vier Multiplexvorrichtungen, wobei jede Multiplexvorrichtung mit einem entsprechenden Port assoziiert ist, wobei jede der Multiplexvorrichtungen zum Transformieren zwischen einem Signal mit breiterem Band und zwei Signalen mit schmalerem Band funktionsfähig ist;
optische Pfade zum Transportieren der zwei Signale mit schmalerem Band zwischen den vier Multiplexvorrichtungen, wobei die optischen Pfade zum Bereitstellen von Pfaden zwischen den Multiplexvorrichtungen, die mit dem ersten Paar von Ports assoziiert sind, und den Multiplexvorrichtungen, die mit dem weiteren Paar von Ports assoziiert sind, konfiguriert sind;
wobei zwei der optischen Pfade Verstärker zum Verstärken von Signalen umfassen, die sich in einer ersten Richtung von einem ersten Paar von Ports zu dem weiteren Paar von Ports bewegen, und zwei der optischen Pfade Verstärker zum Verstärken von Signalen umfassen, die sich in einer umgekehrten Richtung von dem weiteren Paar von Ports zu dem ersten Paar von Ports bewegen; wobei
die Optiksignalverstärkungsvorrichtung eine Pfadumwandlungskonfiguration aufweist, bei der die optischen Pfade so konfiguriert sind, dass Pfade zwischen jeder der zwei Multiplexvorrichtungen, die mit einem Paar von Ports assoziiert sind, und jeder der zwei Multiplexvorrichtungen, die mit dem anderen Paar von Ports assoziiert ist, so bereitgestellt sind, dass kopropagierende Signale, die durch ein paar optischer Fasern transportiert werden, entlang der Pfade zwischen den Multiplexvorrichtungen gelenkt werden, sodass sie als gegenläufig propagierende Signale durch das andere Paar optischer Fasern transportiert werden.

2. Optiksignalverstärkungsvorrichtung nach Anspruch 1, wobei jede der Multiplexvorrichtungen über zwei optische Pfade mit wenigstens einer anderen Multiplexvorrichtung verbunden ist.

3. Optiksignalverstärkungsvorrichtung nach einem vorhergehenden Anspruch,
wobei das Signal mit breiterem Band ein Signal umfasst, das Signale in sowohl einem C-Band als auch einem L-Band umfasst, und die Signale mit schmalerem Band Signale in entweder dem C-Band oder dem L-Band umfassen.

4. Optiksignalverstärkungsvorrichtung nach einem vorhergehenden Anspruch, wobei wenigstens manche der mehreren Multiplexvorrichtungen wellenlängenselektive Schalter umfassen, die zum Auswählen einer Teilmenge des Signals mit breiterem Band als eines der Signale mit schmalerem Band und eine andere Teilmenge des Signals mit breiterem Band als ein weiteres der Signale mit schmalerem Band funktionsfähig sind.

5. Optiksignalverstärkungsvorrichtung nach einem vorhergehenden Anspruch,
wobei die optischen Pfade, die mit der Multiplexvorrichtung verbunden sind, die mit einem Port des ersten Paars von Ports assoziiert ist, Verstärker umfassen, die Signale in der ersten Richtung verstärken; und
die optischen Pfade, die mit der Multiplexvorrichtung verbunden sind, die mit dem anderen Port des ersten Paars von Ports assoziiert ist, Verstärker umfassen, die Signale in der umgekehrten Richtung verstärken.

6. Optiksignalverstärkungsvorrichtung nach einem vorhergehenden Anspruch, die ferner eine einzige Raman-Pumpe umfasst, die zum Pumpen einer des ersten Paars optischer Fasern eingerichtet ist, wobei die Multiplexer, die mit dem ersten Paar von Ports assoziiert sind, mit zwei der Multiplexer verbunden sind, die mit dem weiteren Paar von Ports assoziiert sind.

7. Optiksignalverstärkungsvorrichtung nach einem der Ansprüche 1 bis 5, wobei die Vorrichtung ferner Folgendes umfasst:
wenigstens ein Schaltmittel, das zum selektiven Verbinden optischer Teilpfade, die mit jeder der Multiplexvorrichtungen verbunden sind, die mit dem ersten Paar von Ports assoziiert ist, mit optischen Teilpfaden, die mit jeder der Multiplexvorrichtungen verbunden sind, die mit dem weiteren Paar von Ports assoziiert sind, miteinander eingerichtet ist, um optische Pfade zwischen den Vorrichtungen zu bilden; wobei
bei der Pfadumwandlungskonfiguration das wenigstens eine Schaltmittel zum derartigen Verbinden der optischen Teilpfade funktionsfähig ist, dass optische Pfade zwischen jeder der Multiplexvorrichtungen, die mit einem Paar von Ports assoziiert ist, und beiden Multiplexvorrichtungen, die mit dem anderen Paar von Ports assoziiert sind, bereitgestellt werden, sodass kopropagierende Signale, die durch ein Paar optischer Fasern transportiert werden, in gegenläufig propagierende Signale zum Transport durch das andere Paar optischer Fasern umgewandelt werden; und
bei einer Nicht-Pfadumwandlungskonfiguration das wenigstens eine Schaltmittel zum derartigen Verbinden der optischen Teilpfade funktionsfähig ist, dass mehrere optische Pfade zwischen jeder der Multiplexvorrichtungen, die mit einem Paar von Ports assoziiert ist, und einem entsprechenden der Multiplexer, der mit dem anderen Paar von Ports assoziiert ist, bereitgestellt werden.

8. Optiksignalverstärkungsvorrichtung nach Anspruch 7, wobei wenigstens ein Schaltmittel zum Verbinden mit optischen Teilpfaden funktionsfähig ist, die mit einem Teil der Multiplexvorrichtung verbunden sind, der für ein gleiches schmaleres Band konfiguriert ist.

9. Optiksignalverstärkungsvorrichtung nach Anspruch 7 oder 8, wobei wenigstens ein Schaltmittel einen optisch-räumlichen Cross-Bar-Schalter umfasst.

10. Optiksignalverstärkungsvorrichtung nach einem der Ansprüche 7 bis 9, die zwei Schaltmittel umfasst, wobei eines der Schaltmittel zum selektiven Verbinden von zwei optischen Teilpfaden, die mit jedem von zwei Multiplexvorrichtungen verbunden sind, die mit dem ersten Paar von Ports verbunden sind, mit zwei optischen Teilpfaden, die mit zwei der Verstärker verbunden sind, funktionsfähig ist, wobei jeder der zwei Verstärker Signale in unterschiedlichen Richtungen verstärkt; und
das weitere der Schaltmittel zum selektiven Verbinden von zwei optischen Teilpfaden, die mit jeder der Multiplexvorrichtungen verbunden sind, die mit dem weiteren Paar von Ports assoziiert sind, mit zwei optischen Teilpfaden, die mit zwei der Verstärker verbunden sind, funktionsfähig ist.

11. Optiksignalverstärkungsvorrichtung nach einem vorhergehenden Anspruch, wobei die Verstärker in den optischen Pfaden mit Erbium dotierte Faserverstärker umfassen.

12. Optiksignalverstärkungsvorrichtung nach einem vorhergehenden Anspruch, wobei die Verstärker in den optischen Pfaden zum Verstärken eines ausgewählten der schmaleren Bänder konfiguriert ist, wobei die Multiplexvorrichtung zum Routen von Signalen eines für den Verstärker angemessenen Bandes zu dem entsprechenden optischen Pfad konfiguriert ist.

13. Verfahren zum Konfigurieren einer Optiksignalverstärkungsvorrichtung innerhalb eines optischen Netzes, wobei die Optiksignalverstärkungsvorrichtung Folgendes umfasst: ein erstes Paar von Ports zum Verbinden mit einem ersten Paar optischer Fasern eines Bereichs und ein weiteres Paar von Ports zum Verbinden mit einem Paar optischer Fasern eines weiteren Bereichs, vier Multiplexvorrichtungen, wobei jede Multiplexvorrichtung mit einem entsprechenden Port assoziiert ist, wobei jede der Multiplexvorrichtungen zum Transformieren zwischen einem Signal mit breiterem Band und zwei Signalen mit schmalerem Band funktionsfähig ist; optische Pfade zum Transportieren der Signale mit schmalerem Band zwischen den vier Multiplexvorrichtungen, wobei die optischen Pfade zum Bereitstellen von Pfaden zwischen den Multiplexvorrichtungen, die mit dem ersten Paar von Ports assoziiert sind, und den Multiplexvorrichtungen, die mit dem weiteren Paar von Ports assoziiert sind, konfiguriert sind; wobei zwei der optischen Pfade Verstärker zum Verstärken von Signalen umfassen, die sich in einer ersten Richtung von dem ersten Paar von Ports zu dem weiteren Paar von Ports bewegen, und zwei der optischen Pfade Verstärker zum Verstärken von Signalen umfassen, die sich in einer umgekehrten Richtung von dem weiteren Paar von Ports zu dem ersten Paar von Ports bewegen; wobei das Verfahren Folgendes umfasst:
Bestimmen, ob die zwei Bereiche von Optikfaserpaaren, die durch die Verstärkungsvorrichtung zu verbinden sind, zwischen Kosignalpropagation und gegenläufiger Signalpropagation wechseln sollen, und falls ja:
Bilden optischer Pfade innerhalb der Verstärkungsvorrichtung derart, dass jede der Multiplexvorrichtungen, die mit dem ersten Paar von Ports assoziiert ist, durch einen optischen Pfad mit jeder der Multiplexvorrichtungen, die mit dem weiteren Paar von Ports assoziiert ist, verbunden ist, sodass kopropagierende Signale, die durch ein Paar optischer Fasern transportiert werden, wobei jede Faser in dem Paar Signale in einer anderen Richtung transportiert, in gegenläufig propagierende Signale zum Transport durch das andere Paar optischer Fasern umgewandelt werden, und falls nicht,
Bilden optischer Pfade innerhalb der Verstärkungsvorrichtungen, so dass jede der Multiplexvorrichtungen, die mit dem ersten Paar von Ports assoziiert ist, durch mehrere optische Pfade mit einem entsprechenden der Multiplexer, der mit dem weiteren Paar von Ports assoziiert ist, verbunden wird, so dass es keine Änderung der Propagationsmode der Signale gibt.

14. Verfahren zum Konfigurieren einer Optiksignalverstärkungsvorrichtung nach Anspruch 13, wobei das Bilden der optischen Pfade Schalten eines Schalters umfasst.

## Revendications

1. Dispositif d'amplification de signal optique comprenant :
quatre ports comprenant une première paire de ports pour la connexion à une première paire de fibres optiques et une autre paire de ports pour la connexion à une autre paire de fibres optiques ;
quatre dispositifs de multiplexage, chaque dispositif de multiplexage étant associé à un port correspondant, chacun desdits dispositifs de multiplexage étant utilisable pour effectuer une transformation entre un signal à bande plus large et deux signaux à bande plus étroite ;
des chemins optiques destinés à transporter lesdits deux signaux à bande plus étroite entre lesdits quatre dispositifs de multiplexage, lesdits chemins optiques étant configurés pour établir des chemins entre lesdits dispositifs de multiplexage associés à ladite première paire de ports et lesdits dispositifs de multiplexage associés à ladite autre paire de ports ;
deux desdits chemins optiques comprenant des amplificateurs destinés à amplifier des signaux se propageant dans une première direction depuis ladite première paire de ports vers ladite autre paire de ports et deux desdits chemins optiques comprenant des amplificateurs destinés à amplifier des signaux se propageant dans une direction inverse depuis ladite autre paire de ports vers ladite première paire de ports ; dans lequel
ledit dispositif d'amplification de signal optique comprend une configuration de conversion de chemin dans laquelle lesdits chemins optiques sont configurés de manière à ce que des chemins soient établis entre chacun desdits deux dispositifs de multiplexage associés à une paire de ports et chacun desdits deux dispositifs de multiplexage associés à l'autre paire de ports, afin que des signaux dans un mode de co-propagation transportés par une paire de fibres optiques soient dirigés le long desdits chemins entre lesdits dispositifs de multiplexage de manière à ce qu'ils soient transportés en tant que signaux dans un mode de contre-propagation par l'autre paire de fibres optiques.

2. Dispositif d'amplification de signal optique selon la revendication 1, dans lequel chacun desdits dispositifs de multiplexage est connecté via deux chemins optiques à au moins un autre dispositif de multiplexage.

3. Dispositif d'amplification de signal optique selon l'une quelconque des revendications précédentes, dans lequel ledit signal à bande plus large comprend un signal comprenant des signaux à la fois en bande C et en bande L et lesdits signaux à bande plus étroite comprennent des signaux dans l'une de ladite bande C ou de ladite bande L.

4. Dispositif d'amplification de signal optique selon l'une quelconque des revendications précédentes, dans lequel au moins certains de ladite pluralité de dispositifs de multiplexage comprennent des commutateurs sélectifs en longueur d'onde utilisables pour sélectionner un sous-ensemble dudit signal à bande plus large en tant que l'un desdits signaux à bande plus étroite et un sous-ensemble différent dudit signal à bande plus large en tant qu'autre desdits signaux à bande plus étroite.

5. Dispositif d'amplification de signal optique selon l'une quelconque des revendications précédentes, dans lequel lesdits chemins optiques se connectant audit dispositif de multiplexage associé à un port de ladite première paire de ports comprennent des amplificateurs amplifiant des signaux dans ladite première direction ; et
lesdits chemins optiques connectés audit dispositif de multiplexage associé à l'autre port de ladite première paire de ports comprennent des amplificateurs amplifiant des signaux dans ladite direction inverse.

6. Dispositif d'amplification de signal optique selon l'une quelconque des revendications précédentes, comprenant en outre une pompe Raman unique conçue pour pomper l'une de ladite première paire de fibres optiques, lesdits multiplexeurs associés à ladite première paire de ports étant chacun connectés à deux desdits multiplexeurs associés à ladite autre paire de ports.

7. Dispositif d'amplification de signal optique selon l'une quelconque des revendications 1 à 5, ledit dispositif comprenant en outre :
au moins un moyen de commutation utilisable pour connecter sélectivement ensemble des sous-chemins optiques se connectant à chacun desdits dispositifs de multiplexage associés à ladite première paire de ports, à des sous-chemins optiques se connectant à chacun desdits dispositifs de multiplexage associés à ladite autre paire de ports pour former des chemins optiques entre lesdits dispositifs ; dans lequel,
dans ladite configuration de conversion de trajet, ledit au moins un moyen de commutation est utilisable pour connecter lesdits sous-chemins optiques de manière à ce que des chemins optiques soient établis entre chacun desdits dispositifs de multiplexage associés à une paire de ports et les deux dispositifs de multiplexage associés à l'autre paire de ports, afin que des signaux dans un mode de co-propagation transportés par une paire de fibres optiques soient convertis en des signaux dans un mode de contre-propagation en vue de leur transport par l'autre paire de fibres optiques ; et
dans une configuration sans conversion de chemin, ledit au moins un moyen de commutation est utilisable pour connecter lesdits sous-chemins optiques de manière à ce que de multiples chemins optiques soient établis entre chacun desdits dispositifs de multiplexage associés à une paire de ports et l'un correspondant desdits multiplexeurs associés à l'autre paire de ports.

8. Dispositif d'amplification de signal optique selon la revendication 7, dans lequel ledit au moins un moyen de commutation est utilisable pour connecter des sous-chemins optiques se connectant à une partie dudit dispositif de multiplexage configuré pour une même bande plus étroite.

9. Dispositif d'amplification de signal optique selon la revendication 7 ou 8, dans lequel ledit au moins un moyen de commutation comprend un commutateur optique spatial à barres croisées.

10. Dispositif d'amplification de signal optique selon l'une quelconque des revendications 7 à 9, comprenant deux moyens de commutation, l'un desdits moyens de commutation étant utilisable pour connecter sélectivement deux sous-chemins optiques, connectés à chacun de deux dispositifs de multiplexage associés à ladite première paire de ports, à deux sous-chemins optiques connectés à deux desdits amplificateurs, chacun desdits deux amplificateurs amplifiant des signaux dans des directions différentes ; et
ledit autre desdits moyens de commutation étant utilisable pour connecter sélectivement deux sous-chemins optiques, connectés à chacun de deux dispositifs de multiplexage associés à ladite autre paire de ports, à deux sous-chemins optiques connectés auxdits deux desdits amplificateurs.

11. Dispositif d'amplification de signal optique selon l'une quelconque des revendications précédentes, dans lequel lesdits amplificateurs présents sur lesdits chemins optiques comprennent des amplificateurs à fibre dopée à l'erbium.

12. Dispositif d'amplification de signal optique selon l'une quelconque des revendications précédentes, dans lequel lesdits amplificateurs présents sur lesdits chemins optiques sont configurés pour amplifier l'une sélectionnée desdites bandes plus étroites, lesdits dispositifs de multiplexage étant configurés pour acheminer des signaux d'une bande appropriée audit amplificateur vers ledit chemin optique correspondant.

13. Procédé de configuration d'un dispositif d'amplification de signal optique dans un réseau optique, ledit dispositif d'amplification de signal optique comprenant une première paire de ports pour la connexion à une paire de fibres optiques correspondant à une étendue et une autre paire de ports pour la connexion à une paire de fibres optiques correspondant à une autre étendue, quatre dispositifs de multiplexage, chaque dispositif de multiplexage étant associé à un port correspondant, chacun desdits dispositifs de multiplexage étant utilisable pour effectuer une transformation entre un signal à bande plus large et deux signaux à bande plus étroite ; des chemins optiques destinés à transporter lesdits signaux à bande plus étroite entre lesdits quatre dispositifs de multiplexage, lesdits chemins optiques étant configurés pour établir des chemins entre lesdits dispositifs de multiplexage associés à ladite première paire de ports et lesdits dispositifs de multiplexage associés à ladite autre paire de ports ; deux desdits chemins optiques comprenant des amplificateurs destinés à amplifier des signaux se propageant dans une première direction depuis ladite première paire de ports vers ladite autre paire de ports et deux desdits chemins optiques comprenant des amplificateurs destinés à amplifier des signaux se propageant dans une direction inverse depuis ladite autre paire de ports vers ladite première paire de ports ; ledit procédé comprenant :
la détermination du fait de savoir si lesdites deux étendues de paires de fibres optiques devant être connectées par ledit dispositif d'amplification doivent basculer entre un mode de co-propagation et un mode de contre-propagation du signal et si cela est le cas :
la formation de chemins optiques à l'intérieur dudit dispositif d'amplification de manière à ce que chacun desdits dispositifs de multiplexage associés à ladite première paire de ports soit connecté par un chemin optique à chacun desdits dispositifs de multiplexage associés à ladite autre paire de ports, afin que des signaux dans un mode de co-propagation transportés par une paire de fibres optiques, chaque fibre de ladite paire transportant des signaux dans une direction différente, soient convertis en des signaux dans un mode de contre-propagation en vue de leur transport par l'autre paire de fibres optiques ; et sinon
la formation de chemins optiques à l'intérieur dudit dispositif d'amplification de manière à ce que chacun desdits dispositifs de multiplexage associés à ladite première paire de ports soit connecté par de multiples chemins optiques à l'un correspondant desdits multiplexeurs associés à ladite autre paire de ports, afin qu'il ne se produise aucun basculement du mode de propagation desdits signaux.

14. Procédé de configuration d'un dispositif d'amplification de signal optique selon la revendication 13, dans lequel la formation desdits chemins optiques comprend la commutation d'un commutateur.
